# EUROPÄISCHE PATENTSCHRIFT

(11) **EP 0 948 261 B1**
(45) Veröffentlichungstag und Bekanntmachung des Hinweises auf die Patenterteilung: **14.01.2004**
(21) Anmeldenummer: 97911046.7
(22) Anmeldetag: 06.11.1997
(51) Int. Cl.: A21C 15/00

(54) **VORRICHTUNG ZUM BEHANDELN VON AUF STÄRKEBASIS HERGESTELLTEN PRODUKTEN**
DEVICE FOR TREATING STARCH-BASED PRODUCTS
PROCEDE DE TRAITEMENT DE PRODUITS A BASE D'AMIDON

(30) Priorität: 06.11.1996 AT 193196
(43) Veröffentlichungstag der Anmeldung: 13.10.1999
(73) Patentinhaber: Franz Haas Waffelmaschinen-Industrie Aktiengesellschaft, 1210 Wien (AT); Florenca Gestao E Investimentos LDA, 9000 Sao Pedro, Funchal MADEIRA (PT)
(72) Erfinder: HAAS, Franz, Jun., A-1010 Wien (AT)
(74) Vertreter: Puchberger, Rolf
(86) Internationale Anmeldenummer: PCT/AT1997/000241
(87) Internationale Veröffentlichungsnummer: WO 1998/019547

(56) Entgegenhaltungen:
- EP-A- 0 111 593
- EP-A- 0 131 448
- DE-A- 3 345 473
- DE-A- 4 040 429
- DE-A- 4 320 482
- FR-A- 2 424 705
- GB-A- 2 156 501
- GB-A- 2 177 586
- US-A- 3 670 132
- US-A- 3 804 583

## Beschreibung

### Technisches Gebiet:

Die Erfindung betrifft eine Vorrichtung zum Behandeln von auf Stärkebasis hergestellten Produkten, wie z.B. eßbaren Waffelprodukten oder verrottbaren Verpackungsprodukten, mit Luft zum Einstellen eines bestimmten Feuchtigkeitsgehaltes der Produkte oder zum Kühlen der Produkte. Diese Vorrichtung weist ein, eine äußere Verkleidung tragendes Maschinengestell auf, das zumindest eine Transportvorrichtung enthält, die die Produkte in zumindest einem, nach außen von der äußeren Verkleidung begrenzten Transportkanal von einer Eingabestation in einer oder mehreren Produktbahnen durch eine oder mehrere Zonen zu einer Ausgabestation transportiert. Jede Zone enthält zumindest zwei, zumindest teilweise parallel zu einer Produktbahn verlaufende Luftkanäle, die jeweils eine der Produktbahn zugewandte und mit Luft-Durchtrittsöffnungen versehene Kanalwand besitzen. In jeder Zone strömt Luft aus einem Luftkanal quer zur Transportrichtung der Produkte durch die Produktbahn in den anderen Luftkanal.

### Stand der Technik:

Das Behandeln von auf Stärkebasis hergestellten Produkten mit Luft zum Einstellen eines bestimmten Feuchtigkeitsgehaltes der Produkte erlaubt es, die Produkteigenschaften gezielt auf einen bestimmten Verwendungszweck oder eine bestimmte Variante der weiteren Verarbeitung der behandelten Produkte auszurichten. Zum Behandeln wird Luft verwendet, die innerhalb oder außerhalb der jeweiligen Behandlungsvorrichtung erwärmt und befeuchtet, oder erwärmt, befeuchtet und gefiltert wurde. Behandelt werden zumeist auf Stärkebasis hergestellte Produkte. Dies sind beispielsweise dünnwandige Formkörper, die aus Cerealienmehle und/oder Stärke enthaltenden Massen hergestellt wurden. Diese Formkörper können durch Spritzgießen, oder Extrudieren oder durch Backen zwischen zwei Formhälften hergestellt werden. Beispiele für solche Produkte sind für den menschlichen Verzehr bestimmte Waffeln, wie z.B. tiefe Becher, flache Teller, flache Schalen, flache Tassen, ebene Blätter etc., wie sie aus der Backwaren-, Waffelbackwaren- oder Süßwarenindustrie bekannt sind. Andere Beispiele für solche Produkte sind verrottbare Verpackungsprodukte, wie z. B. tiefe Becher, flache Teller, flache Schalen, flache Tassen, Fast-Food-Verpackungen, Trays, ebene Blätter etc..

Das Behandeln von auf Stärkebasis hergestellten Produkten mit Luft zum Kühlen der Produkte erlaubt es, Produkte, die aus dünnwandigen Formkörpern und durch Temperieren streichfähig gemachten Streichmassen zusammengesetzt wurden, durch Verfestigen der Streichmassen in steife Blöcke zu verwandeln, die anschließend wie massive Blöcke gehandhabt bzw. weiterverarbeitet werden können. Beispiele für solche Produkte sind mit Creme gefüllte Waffelblöcke, wie sie in der Backwaren-, Waffelbackwaren- oder Süßwarenindustrie beim Herstellen von eßbaren, gefüllten Waffeln als Zwischenprodukte der jeweiligen Produktionslinie hergestellt und weiterverarbeitet werden.

Bei der Herstellung von verrottbaren Verpackungsprodukten aus Cerealienmehle und/oder Stärke enthaltenden Massen ist es bekannt, die betreffenden dünnwandigen Formkörper durch Behandeln mit feuchter Luft auf einen Feuchtigkeitsgehalt von 6 Gew.-% bis 22 Gew.-% einzustellen, um zähe, feste und eine hohe mechanische Stabilität aufweisende Produkte zu erhalten.

In der Süßwarenindustrie sind kontinuierlich arbeitende Produktionslinien für die Herstellung von kleinen, mit Creme gefüllten und mit Schokolade überzogenen Waffeln bekannt. In diesen Produktionslinien werden in automatischen Waffelbackmaschinen große, ebene, rechteckige Waffelblätter hergestellt, die in den Backformen der kontinuierlich umlaufenden Backzangen der Waffelbackmaschinen aus einem flüssigen, hauptsächlich aus Wasser und Mehl bestehenden Waffelteig gebacken werden. Diese Waffelblätter verlassen die jeweilige Backmaschine in einem knusprigen, spröden und leicht zerbrechlichen Zustand mit einem Feuchtigkeitsgehalt von 1 Gew.-% bis 2 Gew.-%. Diese Waffelblätter stellen ein Zwischenprodukt der jeweiligen Produktionslinie dar, dessen Feuchtigkeitsgehalt in einer, in die Produktionslinie integrierten Vorrichtung zum Behandeln der Waffelblätter mit Luft gezielt auf einen erhöhten Feuchtigkeitsgehalt von 4 Gew.-% bis 6 Gew.-% eingestellt wird. Dieser erhöhte Feuchtigkeitsgehalt soll während einer längeren Lagerung der fertigen, mit Schokolade überzogenen Waffeln das Ablösen der Schokoladeüberzüge von den Waffeln verhindern.

Eine bekannte Vorrichtung zum Behandeln der Waffelblätter mit Luft wird als Konditionierkanal bezeichnet, der zwei übereinander angeordnete Behandlungszonen mit zwei horizontal ausgerichteten Produktbahnen aufweist und eine endlose Transportvorrichtung enthält, die die Waffelblätter in Transportfächern stehend durch einen horizontalen Transportkanal und beide Behandlungszonen transportiert. Eine andere bekannte Vorrichtung zum Behandeln der Waffelblätter mit Luft wird als Konditionierturm bezeichnet, der zwei nebeneinander angeordnete Behandlungszonen mit zwei vertikal ausgerichteten Produktbahnen aufweist und eine endlose Transportvornchtung enthält, die die Waffelblätter in Transportfächern liegend durch einen vertikalen Transportkanal und beide Behandlungszonen transportiert.

Die Waffelblätter mit erhöhtem Feuchtigkeitsgehalt werden in der jeweiligen Produktionslinie an der Oberseite mit einer Creme beschichtet, die durch Temperieren streichfähig gemacht wurde, und anschließend gruppenweise zu mit Creme gefüllten Waffelblöcken übereinandergeschichtet. Dabei entstehen, je nach Produktionslinie, an der Oberseite jeweils mit einer Cremeschicht bedeckte Waffelblöcke oder an der Oberseite jeweils von einem unbeschichteten Waffelblatt bedeckte Waffelblöcke. Diese Waffelblöcke werden in einer Vorrichtung zum Behandeln der Waffelblöcke mit Luft gekühlt, um die streichfähige Creme zu verfestigen und die Waffelblöcke in kompakte steife Blöcke zu verwandeln.

Eine bekannte Vorrichtung zum Behandeln von, an der Oberseite jeweils mit einer Cremeschicht bedeckten Waffelblöcken wird als Kühlkanal bezeichnet, in dem die Waffelblöcke in einer horizontalen Produktbahn liegend und mit der beschichteten Oberseite nach oben weisend durch eine oder mehrere Kühlzonen transportiert werden. Eine bekannte Vorrichtung zum Behandeln von, an der Oberseite jeweils von einem unbeschichteten Waffelblatt bedeckten Waffelblöcken wird als Waffelkühlpresse bezeichnet, in der eine endlose Transportvorrichtung die Waffelblöcke in einer in sich geschlossenen Produktbahn durch einen von der äußeren Verkleidung umhüllten Raum transportiert, in dem die in einer, Kühlzone gekühlte Luft umgewälzt wird.

Die gekühlten und verfestigten Waffelblöcke werden in der jeweiligen Produktionslinie in viele kleine quaderförmige Waffelstücke zerteilt, die während ihres weiteren Transportes zuerst vereinzelt und dann einzeln mit Schokolade überzogen werden. Diese kleinen mit Creme gefüllten und mit Schokolade überzogenen Waffeln stellen das Endprodukt der jeweiligen Produktionslinie dar, das am Ende der Produktionslinie verpackt wird.

Bei den bekannten, zum Einstellen eines bestimmten Feuchtigkeitsgehaltes der Produkte oder zum Kühlen der Produkte eingesetzten Vorrichtungen ist das Maschinengestell zumeist als rechteckiger Kastenrahmen ausgebildet, der aus horizontal und vertikal verlautenden Vierkantrohren besteht und mit einer äußeren, wärmeisolierenden Verkleidung verkleidet ist. Der Transportkanal für die Produkte und die Luftkanäle der von feuchter oder gekühlter Luft durchströmten Zonen sind im Innenraum des Kastenrahmens untergebracht. Die parallel zu einer Produktbahn verlaufenden Luftkanäle besitzen jeweils eine der Produktbahn zugewandte und mit Luft-Durchtrittsöffnungen versehene Kanalwand. Die Luftkanäle sind jeweils für sich aus mehreren, durch Stoßfugen getrennten Kanalabschnitten zu einem selbsttragenden Bauteil zusammengesetzt, der an, vom Kastenrahmen nach innen vorstehenden Querträgern befestigt ist. Jeder Luftkanal ist im Abstand von der Innenseite des Kastenrahmens angeordnet, damit zwischen ihm und dem Kastenrahmen genügend Bewegungsraum frei bleibt, der für die Schwenkvorrichtungen der Türen der äußeren Verkleidung erforderlich ist.

Bei den bekannten, zum Einstellen eines bestimmten Feuchtigkeitsgehaltes der Produkte oder zum Kühlen der Produkte eingesetzten Vorrichtungen ist das Reinigen und Desinfizieren sehr umständlich und zeitraubend und kann daher nur während längerer Stillstandszeiten der gesamten Produktionslinie vorgenommen werden. Der Arbeitsaufwand für das Reinigen, Desinfizieren und Keimfreihalten der bekannten Vorrichtungen ist sehr groß, müssen doch nicht nur die Luftkanäle mit ihren zahlreichen Stoßfugen und Luft-Durchtrittsöffnungen gereinigt, desinfiziert und keimfrei gehalten werden, sondern zusätzlich auch noch die Innenseiten der äußeren Verkleidung und alle innerhalb dieser im Innenraum der Vorrichtung angeordneten Bauteile und Flächen. Dies reicht von den Plattenelementen und Türen der äußeren Verkleidung über den tragenden Kastenrahmen mit seinen horizontal und vertikal verlaufenden Vierkantrohren und den die Luftkanäle tragenden Querträgern samt den zahlreichen von den Trägern gebildeten Ecken und Fugen bis zu den Außenseiten und Innenseiten der Kanalwände der einzelnen Luftkanäle.

Bevor bei den bekannten Vorrichtungen mit der Reinigung und Desinfektion der Außenseiten und Innenseiten der Kanalwände der einzelnen Luftkanäle begonnen werden kann, müssen zuerst die Plattenelemente der äußeren Verkleidung vom Kastenrahmen abgenommen bzw. die Türen der äußeren Verkleidung vollständig zur Seite geschwenkt werden. Erst dann können die Luftkanäle innerhalb des Kastenrahmens von dessen Querträgern abmontiert und in ihre einzelnen Kanalabschnitte zerlegt werden. Diese müssen nun zwischen den, aus Vierkantrohren bestehenden horizontalen und vertikalen Streben des Kastenrahmens hindurch aus dem Innenraum der Vorrichtung herausgeführt werden, bevor sie vollständig in ihre Einzelteile zerlegt werden können. Erst dann sind die Außenseiten und Innenseiten aller glatten bzw. mit Luft-Durchtrittsöffnungen versehenen Wandabschnitte samt allen zwischen diesen liegenden Stoßfugen frei zugänglich sind.

Eine bekannte Vorrichtung zum Einstellen eines bestimmten Feuchtigkeitsgehaltes der Produkte enthält Luftkanäle, bei denen die Kanalwände jeweils von einem langgestreckten Trog und einem Deckel gebildet werden, der die offene Seite des Troges abdeckt und mit diesem luftdicht verbunden ist. Trog und Deckel begrenzen einen langgestreckten, im Querschnitt rechteckigen Luftkanal, der jeweils als ganzer aus dem Kastenrahmen ausgebaut und jeweils als ganzer wieder in den Kastenrahmen eingebaut werden muß.

Nach dem Reinigen und Desinfizieren aller Einzelteile der Luftkanäle müssen deren Kanalabschnitte außerhalb des Kastenrahmens zusammengebaut und in diesen eingeführt werden. Innerhalb des Kastenrahmens werden die Kanalabschnitte wieder zu den einzelnen Luftkanälen zusammengesetzt und an den Querträgern des Kastenrahmens befestigt. Mit diesen sehr umfangreichen und zeitraubenden Arbeiten sind aber erst die Luftkanäle an den Außenseiten und Innenseiten ihrer Kanalwände gereinigt und desinfiziert, nicht aber der Kastenrahmen selbst mit seinen horizontal und vertikal verlaufenden Vierkantrohren und seinen die Luftkanäle tragenden Querträgern, oder die übrigen vom Kastenrahmen getragenen Einbauten, oder die Innenseiten der Plattenelemente und Türen der äußeren Verkleidung.

### Zusammenfassung der Erfindung:

Aufgabe der Erfindung ist es, eine Vorrichtung zum Behandeln von auf Stärkebasis hergestellten Produkten, wie z.B. eßbaren Waffelprodukten oder verrottbaren Verpackungsprodukten, mit Luft zum Einstellen eines bestimmten Feuchtigkeitsgehaltes der Produkte oder zum Kühlen der Produkte anzugeben, deren Aufbau das Reinigen und Desinfizieren vereinfacht und die Baugröße der Vorrichtung verkleinert.

Zur Lösung dieser Aufgabe geht die Erfindung von einer Vorrichtung zum Behandeln von auf Stärkebasis hergestellten Produkten, wie z.B. eßbaren Waffelprodukten oder verrottbaren Verpackungsprodukten, mit Luft zum Einstellen eines bestimmten Feuchtigkeitsgehaltes der Produkte oder zum Kühlen der Produkte aus. Diese Vorrichtung weist ein, eine äußere Verkleidung tragendes Maschinengestell auf, das zumindest eine Transportvorrichtung enthält, die die Produkte in zumindest einem, nach außen von der äußeren Verkleidung begrenzten Transportkanal von einer Eingabestation in einer oder mehreren Produktbahnen durch eine oder mehrere Zonen zu einer Ausgabestation transportiert. Jede Zone enthält zumindest zwei, zumindest teilweise parallel zu einer Produktbahn verlaufende Luftkanäle, die jeweils eine der Produktbahn zugewandte und mit Luft-Durchtrittsöffnungen versehene Kanalwand besitzen. In jeder Zone strömt Luft aus einem Luftkanal quer zur Transportrichtung der Produkte durch die Produktbahn in den anderen Luftkanal. Diese Vorrichtung ist erfindungsgemäß dadurch gekennzeichnet, daß jede Zone zumindest zwei Luftkanäle enthält, die nach außen jeweils von der äußeren Verkleidung und nach innen jeweils von einer mit Luft-Durchtrittsöffnungen versehenen Kanalwand begrenzt sind, die von einer tragenden Wand des Maschinengestelles gebildet wird, und daß zumindest zwei dieser tragenden Wände des Maschinengestelles zwischen sich zumindest einen Transportkanal aufnehmen, der zumindest eine Produktbahn enthält.

Durch die erfindungsgemäße Ausbildung wird die gesamte Vorrichtung in einzelne, nach außen jeweils von der äußeren Verkleidung begrenzte Transport- bzw Luftkanäle, aufgeteilt, die von einander durch Kanalwände getrennt sind, in die das tragende Maschinengestell der Vorrichtung integriert ist. Die erfindungsgemäße Ausbildung erlaubt eine starke Vereinfachung des konstruktiven Aufbaues der Vorrichtung verbunden mit einer Verringerung der Anzahl der Bauteile und des Platzbedarfes am Aufstellungsort. Gleichzeitig können die Luftkanäle um jenen Raum erweitert werden, den bisher der Kastenrahmen und die Zwischenräume zwischen dem Kastenrahmen und den Luftkanälen beansprucht haben. Dadurch können größere Strömungsquerschnitte für die Luftkanäle vorgesehen werden, die bei gleichbleibendem Luftdurchsatz in den Luftkanälen zu langsameren Luftgeschwindigkeiten und geringeren Luftgeräuschen sowie zu einer geringeren Förderung von mit der Luft mitgeführten Teilchen in den Luftkanälen führen.

Nach dem Öffnen der Verkleidung liegen bei der erfindungsgemäßen Vorrichtung die Transport- bzw Luftkanäle nach außen offen und sind zum Reinigen und Desinfizieren leicht zugänglich, wodurch der Reinigungs- und Desinfektionsaufwand drastisch verringert wird. Mit der Integration des tragenden Maschinengestelles in die leicht zugänglichen Kanalwände wird bei der erfindungsgemäßen Vorrichtung die Anzahl und Größe der zu reinigenden und zu desinfizierenden Flächen gegenüber den bekannten Vorrichtungen beträchtlich reduziert. Dazu trägt das Wegfallen der vielen Vierkantrohre eines, die Luftkanäle und den Transportkanal außen umgebenden Kastenrahmens mit ihren großen Oberflächen und ihren vielen Verschneidungen und Hinterschneidungen ebenso bei, wie die Verringerung der Bauteile der Vorrichtung.

Die erfindungsgemäße Ausbildung ist auch bei Vorrichtungen zum Behandeln der auf Stärkebasis hergestellten Produkte mit Luft von Vorteil, wenn die Vorrichtung wegen ihrer großen Baulänge oder wegen ihrer großen Bauhöhe aus mehreren Vorrichtungsabschnitten zusammengesetzt werden muß, die jeweils über Stoßfugen aneinanderstoßen. Die unvermeidbaren, jeweils eine genaue Reinigung und Desinfektion erfordernden Stoßfugen sind durch die erfindungsgemäße Aufteilung der Vorrichtung in nach außen jeweils offene Transport- bzw. Luftkanäle leicht zugänglich.

Gemäß einem weiteren Merkmal der Erfindung kann vorgesehen sein, daß jede tragende Wand des Maschinengestelles, die mit einem Wandbereich eine mit Luft-Durchtrittsöffnungen versehene Kanalwand eines Luftkanales bildet, zumindest an der diesem Luftkanal zugewandten Seite dieses Wandbereiches als glatte Wand ausgebildet ist. Durch diese Ausbildung werden jene Stellen im betreffenden Luftkanal verringert, an denen sich mit der Behandlungsluft mitgerissene und im Luftkanal verteilte Teilchen, Bakterien etc. ansammeln können.

Gemäß einem weiteren Merkmal der Erfindung kann vorgesehen sein, daß jede tragende Wand des Maschinengestelles, die mit einem Wandbereich eine mit Luft-Durchtrittsöffnungen versehene Kanalwand eines Luftkanales bildet, an der diesem Luftkanal zugewandten Seite dieses Wandbereiches und an der von diesem Luftkanal abgewandten Seite dieses Wandbereiches als glatte Wand ausgebildet ist. Durch diese Ausbildung werden bei der, zwischen einem Luftkanal und einem Transportkanal liegenden, mit Luft-Durchtrittsöffnungen versehenen Kanalwand sowohl auf der dem Luftkanal zugewandten Seite als auch auf der dem Transportkanal zugewandten Seit jene Stellen verringert, an denen sich mit der Behandlungsluft mitgerissene und im Luftkanal bzw. im Transportkanal verteilte Teilchen, Bakterien etc. ansammeln können.

Gemäß einem weiteren Merkmal der Erfindung kann vorgesehen sein, daß ein langgestreckter, im wesentlichen horizontaler, eine oder mehrere Produktbahnen enthaltender Transportkanal zwischen zwei tragenden Wänden des Maschinengestelles angeordnet ist, die die mit Luft-Durchtrittsöffnungen versehenen Kanalwände zweier oder mehrerer Luftkanäle bilden.

Durch diese Ausbildung wird eine langgestreckte Vorrichtung zum Behandeln von auf Stärkebasis hergestellten Produkten in einzelne, nach außen jeweils von der äußeren Verkleidung begrenzte, im wesentlichen horizontale Transport- bzw Luftkanäle aufgeteilt, die von einander durch Kanalwände getrennt sind, in die das tragende Maschinengestell der Vorrichtung integriert ist. Eine solche langgestreckte Vorrichtung kann zum Behandeln von Waffelblättern oder anderen, flachen, dünnwandigen Formkörpern (z. B. flache Schalen oder flache Tassen für Verpackungszwecke) mit feuchter Luft ausgebildet sein, wobei die Produkte im Transportkanal stehend durch eine einzige Behandlungszone oder durch zwei oder mehrere aufeinanderfolgende Behandlungszonen transportiert werden. Eine solche langgestreckte Vorrichtung kann zum Kühlen von an der Oberseite jeweils mit einer Cremeschicht bedeckten Waffelblöcken ausgebildet sein, die im Transportkanal mit der Unterseite auf einem Transportband liegend durch eine einzige Behandlungszone oder durch zwei oder mehrere aufeinanderfolgende Behandlungszonen transportiert werden.

Gemäß einem weiteren Merkmal der Erfindung kann vorgesehen sein, daß im horizontalen Transportkanal zwischen zwei übereinander angeordneten Produktbahnen jeweils eine horizontale Zwischenwand vorgesehen ist, die die beiden, den Transportkanal begrenzenden, jeweils die mit Luft-Durchtrittsöffnungen versehenen Kanalwände zweier oder mehrerer Luftkanäle bildenden, tragenden Wände des Maschinengestelles steif miteinander verbindet. Durch diese Ausbildung wird eine zusätzliche Versteifung des tragenden Maschinengestelles erreicht. Durch die horizontalen Zwischenwände wird der horizontale Transportkanal in zwei oder mehrere Transportkanäle geteilt, die sich jeweils entlang einer Produktbahn erstrecken.

Gemäß einem weiteren Merkmal der Erfindung kann vorgesehen sein, daß der Transportkanal übereinander angeordnete Produktbahnen enthält, denen jeweils eine eigene Transportvorrichtung zugeordnet ist. Diese Ausbildung erlaubt es, die Menge der gleichzeitig behandelten Produkte durch Hinzuschalten bzw. Wegschalten einer Transportvorrichtung bzw. einer Produktbahn zu verändern.

Gemäß einem weiteren Merkmal der Erfindung kann vorgesehen sein, daß sich in dem Transportkanal zumindest eine, endlose Transportvorrichtung durch zwei übereinander angeordnete Produktbahnen erstreckt.

Gemäß einem weiteren Merkmal der Erfindung kann vorgesehen sein, daß ein langgestreckter, im wesentlichen vertikaler, eine oder mehrere Produktbahnen enthaltender Transportkanal zwischen zwei tragenden Wänden des Maschinengestelles angeordnet ist, die die mit Lutt-Durchtrittsöffnungen versehenen Kanalwände zweier oder mehrerer Luftkanäle bilden. Durch diese Ausbildung wird eine, als vertikaler Turm ausgebildete Vorrichtung zum Behandeln von auf Stärkebasis hergestellten Produkten in einzelne, nach außen jeweils von der äußeren Verkleidung begrenzte, vertikale Transport- bzw Luftkanäle aufgeteilt, die von einander durch Kanalwände getrennt sind, in die das tragende Maschinengestell der Vorrichtung integriert ist. Eine solche Vorrichtung kann zum Behandeln von Waffelblättern oder anderen flachen Formkörpern mit feuchter Luft ausgebildet sein, wobei die Produkte in dem vertikalen Transportkanal in Transportfächern liegend durch die vertikalen Produktbahnen und durch die diesen zugeordneten Behandlungszonen transportiert werden. Eine solche Vorrichtung kann auch zum Kühlen von Waffelblöcken ausgebildet sein, die im vertikalen Transportkanal in Transportfächern liegend durch die vertikalen Produktbahnen und durch die diesen zugeordneten Kühlzonen transportiert werden.

Gemäß einem weiteren Merkmal der Erfindung kann vorgesehen sein, daß im vertikalen Transportkanal zwischen zwei benachbarten Produktbahnen eine vertikale Zwischenwand vorgesehen ist, die die beiden, den Transportkanal begrenzenden, jeweils die mit Luft-Durchtrittsöffnungen versehenen Kanalwände zweier oder mehrerer Luftkanäle bildenden, tragenden Wände des Maschinengestelles steif miteinander verbindet. Durch diese Ausbildung wird eine zusätzliche Versteifung des tragenden Maschinengestelles bei einer als Turm ausgebildeten erfindungsgemäßen Vorrichtung erreicht. Durch die vertikale Zwischenwand wird der vertikale Transportkanal des Turmes in zwei, jeweils nach außen von der äußeren Verkleidung begrenzte Transportkanäie geteilt, die sich jeweils entlang einer der beiden vertikalen Produktbahnen erstrecken.

Gemäß einem weiteren Merkmal der Erfindung kann vorgesehen sein, daß im vertikalen Transportkanal zumindest eine, endlose Transportvorrichtung für die Produkte vorgesehen ist, die sich durch zwei benachbarte Produktbahnen erstreckt und zur äußeren Verkleidung hin offene Transportfächer aufweist, die an ihren Innenseiten durch zumindest ein endloses Band der Transportvorrichtung begrenzt sind. Diese Ausbildung erlaubt es, die im oberen Endabschnitt des vertikalen Transportkanales, beim Übergang von einer Produktbahn in die andere eintretende Relativbewegung zwischen Transportfach und dem in ihm aufgenommenen Produkt gezielt zu beeinflussen. Das endlose Band der Transportvorrichtung bildet eine bewegliche, innere Begrenzung der Transportfächer, die im Bereich des oberen Endabschnittes des Transportkanales wirksam wird, wenn das Produkt in seinem Transportfach zufolge der Schwerkraft mit dem Band in Berührung kommt und in seinem Transportfach von der nacheilenden Fachbegrenzung an die vorauseilende Fachbegrenzung übergeben wird.

Gemäß einem weiteren Merkmal der Erfindung kann vorgesehen sein, daß die, jeweils eine mit Luft-Durchtrittsöffnungen versehene Kanalwand eines Luftkanales bildenden, tragenden Wände des Maschinengestelles als massive Platten ausgebildet sind.

Gemäß einem weiteren Merkmal der Erfindung kann vorgesehen sein, daß die, jeweils eine mit Luft-Durchtrittsöffnungen versehene Kanalwand eines Luftkanales bildenden, tragenden Wände des Maschinengestelles als massive Aluminiumplatten ausgebildet sind.

Gemäß einem weiteren Merkmal der Erfindung kann vorgesehen sein, daß die äußere Verkleidung zumindest im Bereich der von ihr nach außen begrenzten Luftkanäle am Maschinengestell schwenkbar gelagerte Türen aufweist, die im geschlossenen Zustand mit ihren glatten Innenseiten den jeweiligen Luftkanal nach außen begrenzen.

Nachstehend wird die Erfindung anhand von Ausführungsbeispielen näher erläutert.

### Kurze Beschreibung der Zeichnungen:

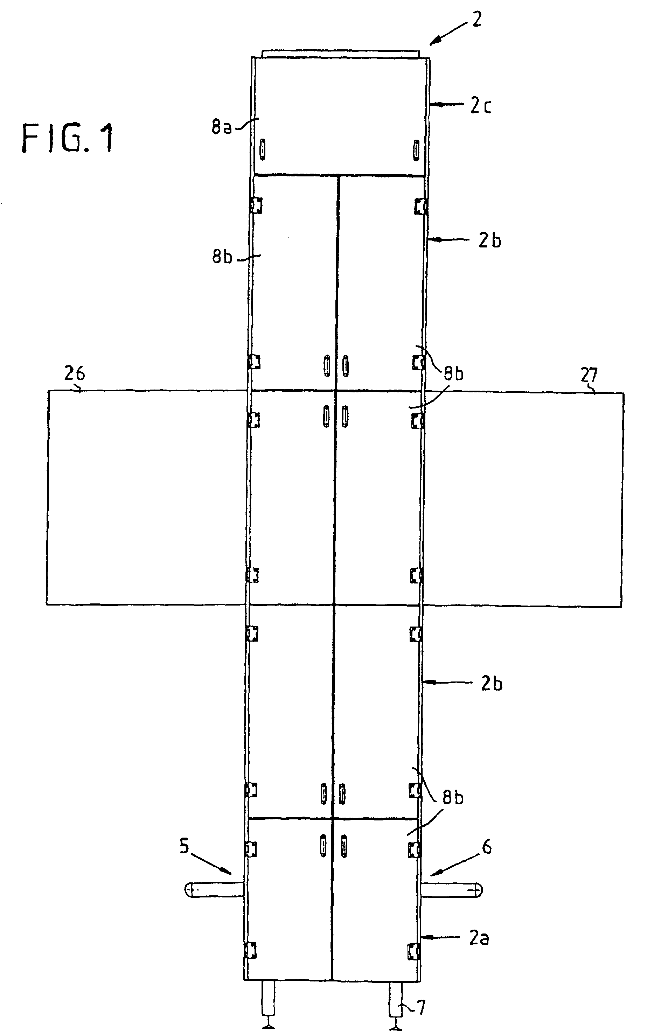

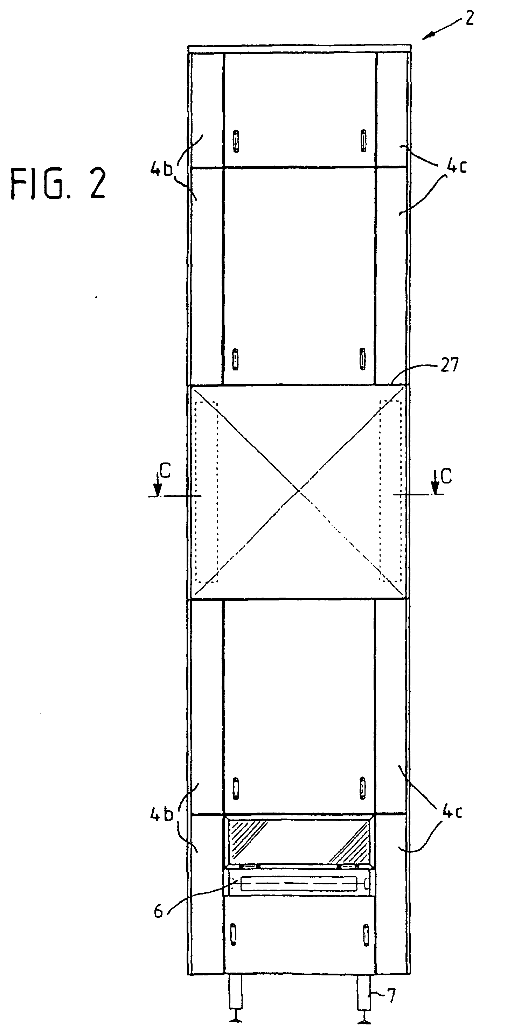

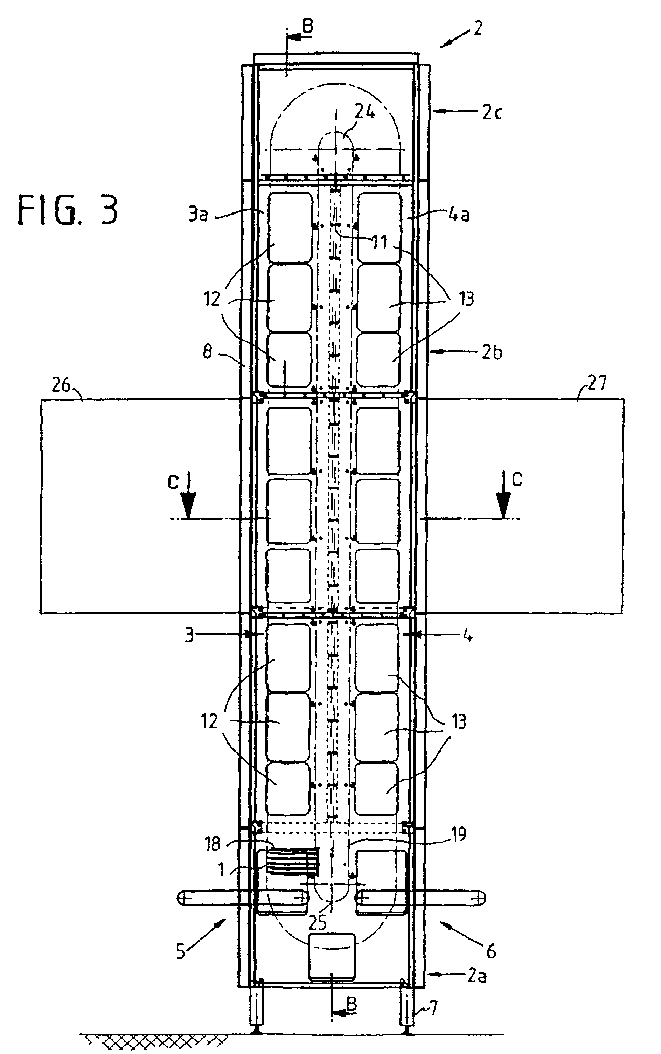

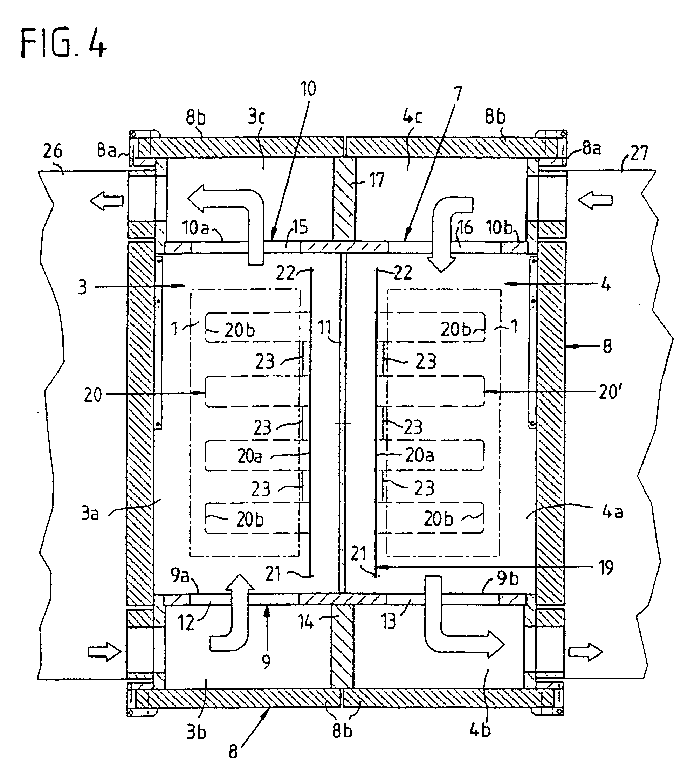

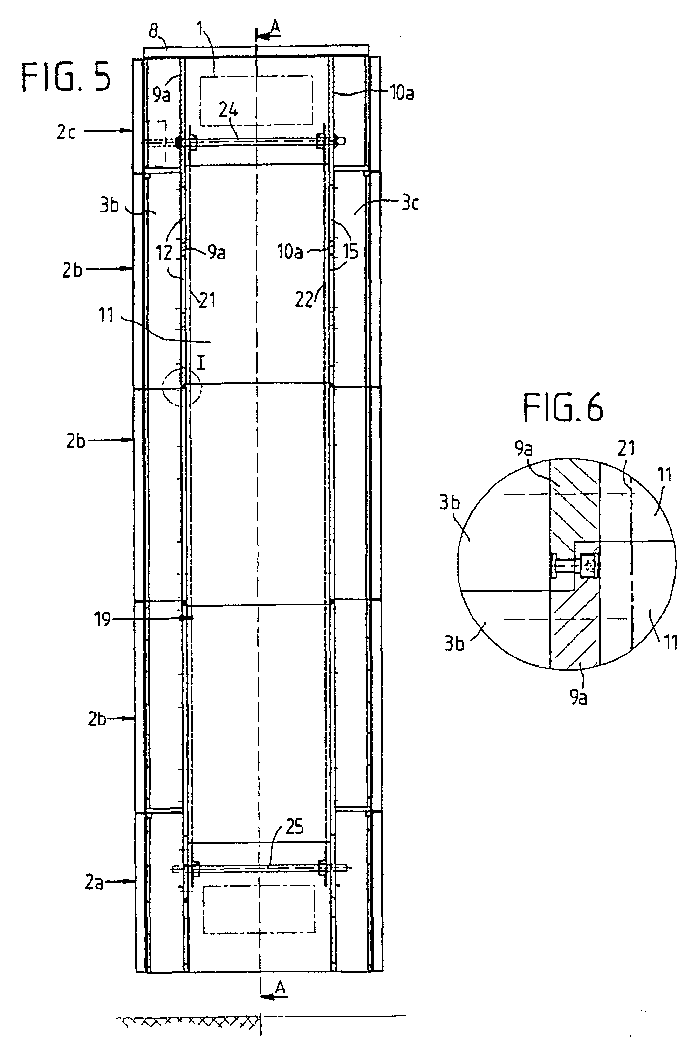

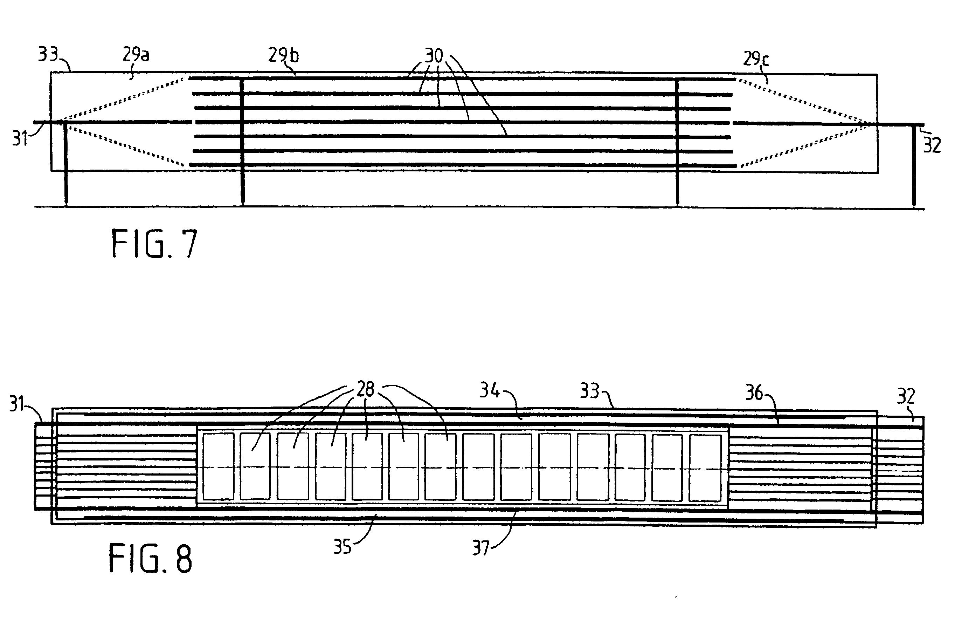

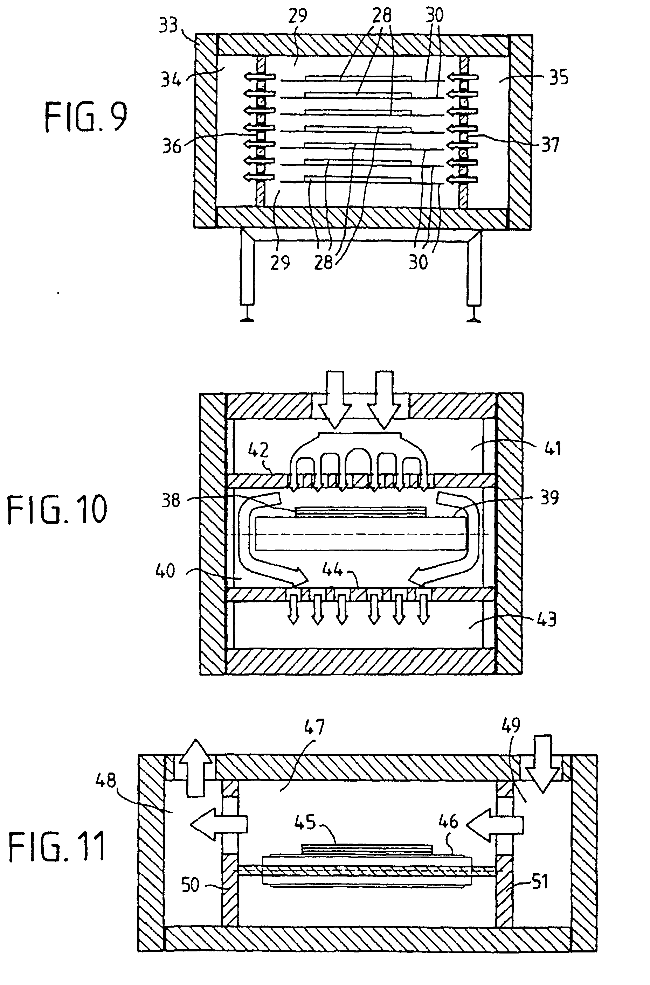

In den Zeichnungen zeigen: Fig. 1 eine Frontalansicht einer als Turm ausgebildeten Ausführungsform einer Vorrichtung zum Behandeln von auf Stärkebasis hergestellten Produkten mit Luft, Fig. 2 eine Seitenansicht der Vorrichtung der Fig. 1, Fig. 3 schematisch einen, zur ebenen Vorderseite des Turmes parallelen, vertikalen Querschnitt durch die Vorrichtung der Fig. 1 entlang der Linie A-A in Fig. 5, Fig. 4 schematisch einen horizontalen Querschnitt durch die Vorrichtung der Fig. 1 entlang der Linie C-C in Fig. 2 bzw. 3, Fig. 5 schematisch einen zur ebenen Vorderseite des Turmes senkrechten, vertikalen Querschnitt durch die Vorrichtung der Fig. 1 entlang der Linie B-B in Fig. 3, Fig. 6 ein Detail der Fig. 5 im Schnitt. Fig. 7 schematisch einen vertikalen Längsschnitt durch eine langgestreckte Ausführungsform einer Vorrichtung zum Behandeln von auf Stärkebasis hergestellten Produkten mit Luft, Fig. 8 schematisch einen horizontalen Längsschnitt durch die Vorrichtung der Fig. 7, Fig. 9 schematisch einen vertikalen Querschnitt durch die Vorrichtung der Fig. 7, Fig. 10 schematisch einen vertikalen Querschnitt durch eine weitere langgestreckte Ausführungsform einer Vorrichtung zum Behandeln von auf Stärkebasis hergestellten Produkten mit Luft, und Fig. 11 schematisch einen vertikalen Querschnitt durch eine weitere langgestreckte Ausführungsform einer Vorrichtung zum Behandeln von auf Stärkebasis hergestellten Produkten mit Luft.

### Beschreibung von Ausführungsbeispielen:

In den Fig. 1 bis 6 ist eine Ausführungsform einer Vorrichtung zum Behandeln von auf Stärkebasis hergestellten Produkten mit Luft dargestellt, die als vertikaler Turm ausgebildet ist, in dem ebene flache Produkte liegend durch zwei Zonen transportiert werden, in denen sie mit Luft behandelt werden. Die ebenen flachen Produkte können rechteckige Waffelblätter oder rechteckige Waffelblöcke oder andere auf Stärkebasis hergestellte, dünnwandige Formkörper, wie Verpackungstassen oder dergleichen sein.

Die zu behandelnden Produkte 1 werden dem Turm 2 auf seiner linken Seite, d. h. in den Fig. 1 - 4 von links zugeführt. Die behandelten Produkte 1 werden aus dem Turm 2 an seiner rechten Seite, d. h. in den Fig. 1 - 4 nach rechts ausgegeben. in dem rechteckigen Turm 2 ist in der linker Hälfte eine erste Zone 3 und in der rechten Hälfte eine zweite Zone 4 untergebracht. In der linken Turmhälfte ist eine erste, vertikale Produktbahn 3a für die Produkte 1 zwischen einem vorderen und einem hinteren, jeweils vertikalen Luftkanal 3b und 3c der ersten Zone 3 angeordnet. In der rechten Turmhälfte ist eine zweite, vertikale Produktbahn 4a für die Produkte 1 zwischen einem vorderen und einem hinteren, jeweils vertikalen Luftkanal 4b und 4c der zweiten Zone 4 angeordnet.

Der Turm 2 ist der Höhe nach in mehrere Abschnitte gegliedert und besteht aus einem, am Boden aufstehenden, unteren Endabschnitt 2a, mehreren, untereinander gleichen, mittleren Turmabschnitten 2b und einem oberen Endabschnitt 2c. Im unteren Endabschnitt 2a ist die, der linken Turmhälfte zugeordnete Eingabestation 5 und die, der rechten Turmhälfte zugeordnete Ausgabestation 6 untergebracht. Die erste Produktbahn 3a und die beiden, sie begleitenden Luftkanäle 3b und 3c der ersten Zone 3 erstrecken sich, jeweils in Transportrichtung der Produkte 1, von der Eingabestation 5 durch alle mittleren Turmabschnitte 2b vertikal nach oben bis zum oberen Endabschnitt des Turmes 2. Die zweite Produktbahn 4a und die beiden, sie begleitenden Luftkanäle 4b und 4c der zweiten Zone 4 erstrecken sich, jeweils in Transportrichtung der Produkte 1, vom oberen Endabschnitt des Turmes 2 durch alle mittleren Turmabschnitte 2b vertikal nach unten bis zur Ausgabestation 6.

Der Turm 1 besitzt ein tragendes Maschinengestell 7, das sich vertikal durch alle Turmabschnitte erstreckt und eine äußere wärmeisolierende Verkleidung 8 trägt, die aus wärmeisolierenden Platten 8a und wärmeisolierenden Türen 8b besteht, die sich jeweils über die Höhe eines Turmabschnittes 2a, 2b, 2c erstrecken. Die Platten 8a sind am Maschinengestell 7 abnehmbar befestigt und die Türen 8b sind mit dem Maschinengestell 7 bzw. mit den, am Maschinengestell 7 befestigten Platten 8a schwenkbar verbunden.

Eine vordere, vertikale, tragende Wand 9 des Maschinengestelles 7 erstreckt sich durch beide Hälften des Turmes 2 und trennt die beiden Produktbahnen 3a, 4a von den vorderen Luftkanälen 3b, 4b der beiden Zonen 3, 4. Eine hintere, vertikale, tragende Wand 10 des Maschinengestelles 7 erstreckt sich ebenfalls durch beide Hälften des Turmes 2 und trennt die beiden Produktbahnen 3a, 4a von den hinteren Luftkanälen 3c, 4c der beiden Zonen 3, 4. Die beiden Wände 9, 10 des Maschinengestelles 7 sind parallel zueinander angeordnet und durch eine vertikale Zwischenwand 11 des Maschinengestelles 7 steif miteinander verbunden, die zwischen den beiden Produktbahnen 3a, 4a angeordnet ist.

Zwischen der vorderen und hinteren Wand 9, 10 des Maschinengestelles 7 liegt ein vertikaler Transportkanal, der an seiner linken bzw. rechten Außenseite durch die Platten 8a bzw. Türen 8b der äußeren Verkleidung 8 begrenzt ist. Dieser Transportkanal wird durch die Zwischenwand 11 in einen, durch die Zwischenwand 11 nach innen begrenzten und nach außen zur äußeren Verkleidung 8 hin offenen, linken, vertikalen Transportkanal, in dem die erste Produktbahn 3a aufgenommen ist, und in einen, durch die Zwischenwand 11 nach innen begrenzten und nach außen zur äußeren Verkleidung 8 hin offenen, rechten, vertikalen Transportkanal geteilt, in dem die zweite Produktbahn 4a aufgenommen ist.

Die vordere Wand 9 des Maschinengestelles 7 besitzt einen ersten Wandbereich 9a, der in die linke Hälfte des Turmes 2 ragt und mit Luft-Durchtrittsöffnungen 12 versehen ist. Dieser Wandbereich 9a bildet die vordere Begrenzungswand des linken Transporlkanales und gleichzeitig eine mit Luft-Durchtrittsöffnungen 12 versehene Kanalwand, die den vorderen Luftkanal 3b der ersten Zone 3 nach innen begrenzt. Die vordere Wand 9 des Maschinengestelles 7 ragt ferner mit einem zweiten, mit Luft-Durchtrittsöffnungen 13 versehenen Wandbereich 9b in die rechte Hälfte des Turmes 2. Dieser Wandbereich 9b bildet sowohl die vordere Begrenzungswand des rechten Transportkanales als auch eine mit Luft-Durchtrittsöffnungen 13 versehene Kanalwand, die den vorderen Luftkanal 4b der zweiten Zone 4 nach innen begrenzt. Die seitlich nebeneinander angeordneten, vorderen Luftkanäle 3b, 4b der beiden Zonen 3, 4 sind nach außen, d. h. zur Vorderseite und zur linken und rechten Seite des Turmes 1 hin, jeweils durch Platten 8a bzw. Türen 8b der äußeren Verkleidung 8 begrenzt. Zwischen den vorderen Luftkanälen 3b, 4b der beiden Zonen 3, 4 ist eine vertikale Trennwand 14 angeordnete, die von der vorderen Wand 9 des Maschinengestelles 7 nach vorne bis zur äußeren Verkleidung 8 bzw. deren Türen 8b reicht.

Die hintere Wand 10 des Maschinengestelles 7 ragt mit einem ersten, mit Luft-Durchtrittsöffnungen 15 versehenen Wandbereich 10a in die linke Hälfte des Turmes 2. Dieser Wandbereich 10a bildet die hintere Begrenzungswand des linken Transportkanales und gleichzeitig eine mit Luft-Durchtrittsöffnungen 15 versehene Kanalwand, die den hinteren Luftkanal 3c der ersten Zone 3 nach innen begrenzt. Die hintere Wand 10 des Maschinengestelles 7 ragt ferner mit einem zweiten, mit Luft-Durchtrittsöffnungen 16 versehenen Wandbereich 10b in die rechte Hälfte des Turmes 2. Dieser Wandbereich 10b bildet die hintere Begrenzungswand des rechten Transportkanales und gleichzeitig eine mit Luft-Durchtrittsöffnungen 16 versehene Kanalwand. die den hinteren Luftkanal 4c der zweiten Zone 4 nach innen begrenzt. Die seitlich nebeneinander angeordneten, hinteren Luftkanäle 3c, 4c der beiden Zonen 3, 4 sind nach außen, d. h. zur Rückseite und zur linken und rechten Seite des Turmes 1 hin, jeweils durch Platten 8a bzw. Türen 8b der äußeren Verkleidung 8 begrenzt. Zwischen den hinteren Luftkanälen 3c, 4c der beiden Zonen 3, 4 ist eine vertikale Trennwand 17 angeordnete, die von der hinteren Wand 10 des Maschinengestelles 7 nach hinten bis zur äußeren Verkleidung 8 bzw. deren Türen 8b reicht.

Die flachen Produkte 1 werden in der Eingabestation 5 liegend in die Transportfächer 18 einer endlosen Transportvorrichtung 19 eingebracht, die die Produkte 1 im linken Transportkanal durch die erste Produktbahn 3a nach oben und im rechten Transportkanal durch die zweite Produktbahn 4a nach unten zur Ausgabestation 6 befördert, an der die Produkte 1 liegend ausgegeben werden. Die Transportfächer 18 werden jeweils von einem, dem Transportfach in Transportrichtung vorauseilenden, ebenen Rahmen 20 und einem, dem Transportfach in Transportrichtung nacheilenden, ebenen Rahmen 20' begrenzt. Die ebenen Rahmen 20 weisen der Zwischenwand 11 benachbarte, horizontale Querträger 20a auf. Diese sind mit ihren vorderen Enden an einer, der vorderen Wand 9 des Maschinengestelles 7 benachbarten, endlosen Gliederkette 21 befestigt und mit ihren hinteren Enden an einer, der hinteren Wand 10 des Maschinengestelles 7 benachbarten, endlosen Gliederkette 22 befestigt. Von den horizontalen Querträgern 20a der Rahmen 20 ragen jeweils eine gemeinsame Ebene begrenzende Haltebügel 20b in die jeweilige Produktbahn 3a bzw. 4a. Die endlose Transportvorrichtung 19 umfaßt ferner ein endloses Band 23 oder mehrere, parallel zur Zwischenwand 11 nebeneinander angeordnete, endlose Bänder 23. Jedes Band 23 liegt zwischen zwei Haltebügeln 20a der Rahmen 20 bzw. 20' auf den Außenseiten der Querträger 20a auf, begrenzt die Transportfächer 18 nach innen und läuft mit diesen um.

Die beiden Gliederketten 21 und 22 und die an deren Kettengliedern befestigten Rahmen 20 laufen im oberen bzw. unteren Endabschnitt 2a bzw. 2c des Turmes über eine obere bzw. untere Umlenkung 24 bzw. 25 von einer Produktbahn in die andere. Beim Passieren der oberen Umlenkung 24 klappen die, die Transportfächer 18 begrenzenden Rahmen 20, 20' an ihren Außenseiten zuerst etwas auseinander und dann wieder zusammen. Dabei werden die Produkte 1, die in der ersten Produktbahn 3a jeweils auf dem nacheilenden Rahmen 20 eines Transportfaches 18 liegen, an den vorauseilenden Rahmen 20' dieses Transportfaches 18 übergeben, auf dem sie dann in der zweiten Produktbahn 4a liegen. Das jeweilige Produkt 1 kommt mit seinem der Zwischenwand 11 zugewandten Rand beim Passieren der oberen Umlenkung 24 mit den, die innere Begrenzung des betreffenden Transportfaches 18 bildenden Bändern 23 in Berührung. Durch diesen Eingriff wird das Produkt 1 mitgenommen und mit seinem nach unten weisenden Rand vom nacheilenden Rahmen 20 zum vorauseilenden Rahmen 20' des Transportfaches befördert.

Von einem mittleren Abschnitt 2b des Turmes stehen links und rechts zwei rechteckige Gehäuse 26 bzw. 27 nach außen vor. Im linken Gehäuse 26 ist eine, nicht näher dargestellte Anlage zum Aufbereiten bzw. Kühlen der Luft untergebracht. Diese Luft strömt aus dem Gehäuse 26 in den vorderen, vertikalen Luftkanal 3b der ersten Zone 3 und verteilt sich in diesem vertikal über dessen gesamte Höhe. Aus dem vorderen, vertikalen Luftkanal 3b strömt die Luft durch dessen Luft-Durchtrittsöffnungen 12 von der Seite in den linken Transportkanal und durchquert die erste, vertikalen Produktbahn 3a quer zur vertikalen Transportrichtung der Produkte. Aus dem linken Transportkanal strömt die Luft durch die Luft-Durchtrittsöffnungen 15 in den hinteren, vertikalen Luftkanal 3c der ersten Zone 3 und von diesem wieder zurück ins Gehäuse 26. Im rechten Gehäuse 27 ist eine, nicht näher dargestellte Anlage zum Aufbereiten bzw. Kühlen der Luft untergebracht. Diese Luft strömt aus dem Gehäuse 27 in den hinteren, vertikalen Luftkanal 4c der zweiten Zone 4 und verteilt sich in diesem vertikal über dessen gesamte Höhe. Aus dem hinteren, vertikalen Luftkanal 4c strömt die Luft durch dessen Luft-Durchtrittsöffnungen 16 von der Seite in den rechten Transportkanal und durchquert die zweite, vertikale Produktbahn 4a quer zur vertikalen Transportrichtung der Produkte. Aus dem rechten Transportkanal strömt die Luft durch die Luft-Durchtrittsöffnungen 13 in den vorderen, vertikalen Luftkanal 4b der zweiten Zone 4 und von diesem wieder zurück ins Gehäuse 27.

Die Fig. 7 bis 9 zeigen eine Ausführungsform einer horizontal langgestreckten Vorrichtung zum Behandeln von auf Stärkebasis hergestellten Produkten mit Luft. Diese Vorrichtung ist für das Kühlen von ebenen flachen Produkten vorgesehen. Dies können an der Oberseite jeweils mit einer Cremeschicht bedeckten Waffelblocke oder andere flache Produkte sein.

In dieser Vorrichtung werden die zu kühlenden Produkte 28 in einem horizontalen Transportkanal 29 in mehreren übereinander angeordneten, Produktbahnen 30 gekühlt. Die Produkte 28 werden in einer Zufuhrebene 31 in den Transportkanal 29 eingebracht und in dessen Anfangsabschnitt 29a an die übereinander angeordneten Produktbahnen 30 des mittleren Abschnittes 29b des Transportkanales 29 übergeben. Im Endabschnitt 29c des Transportkanales 29 werden die Produkte 28 von den Produktbahnen 30 des mittleren Abschnittes 29b des Transportkanales 29 an eine einzige Ausgabevorrichtung 32 übergeben, die die Produkte 28 aus den Transportkanal 29 hinaustransportiert. Die Zufuhrebene 31 und die Transportebene der Ausgabevorrichtung 32 liegen in der gleichen horizontalen Ebene.

Der Transportkanal 29 ist in einem langgestreckten, rechteckigen Gehäuse 33 zwischen zwei horizontalen Luftkanälen 34 und 35 einer Zone angeordnet, die mit einem, nicht dargestellten Kühlaggregat über Zuluftkanäle und Abluftkanäle verbunden ist und in der gekühlte Luft aus einem Luftkanal 35 quer zur Transportrichtung der Produkte 28 durch den Transportkanal 29 und seine übereinanderliegenden Produktbahnen 30 in den anderen Luftkanal 34 strömt. Zwischen dem Transportkanal 29 und den beiden Luftkanälen 34, 35 ist jeweils eine vertikale, zur Transportrichtung der Produkte 28 parallele Trennwand 36, 37 vorgesehen, die mit Luft-Durchtrittsöffnungen versehen ist. Diese Trennwände 36, 37 werden von tragenden Wänden des Maschinengestelles gebildet, das das Gehäuse 33 trägt. Die beiden Trennwände 36, 37 sind durch einzelne, im Abstand voneinander angeordnete Querträger des Maschinengestelles quer zur Transportrichtung der Produkte 28 miteinander verbunden.

Das Gehäuse 33 besteht aus, am Maschinengestell abnehmbar befestigten, wärmeisolierenden Platten und aus an diesen Platten bzw. am Maschinengestell schwenkbar gelagerten, wärmeisolierenden Türen. Die Platten und Türen bilden eine äußere, wärmeisolierende Verkleidung, die den an seiner Oberseite und an seiner Unterseite offenen Transportkanal 29 nach oben und unten begrenzt. Jeder Luftkanal 34, 35 ist nach innen durch eine, der mit Luft-Durchtrittsöffnungen versehenen Trennwände 36, 37 begrenzt. Die obere Deckwand, die untere Bodenwand und die vom Transportkanal 29 jeweils abgewandte Rückwand jedes Luftkanales 34, 35 wird von der äußeren Verkleidung gebildet.

Fig. 10 zeigt einen Querschnitt durch eine horizontal langgestreckte Vorrichtung zum Behandeln von auf Stärkebasis hergestellten Produkten mit Luft. Diese Vorrichtung ist als Kühlvorrichtung ausgebildet, in der die Produkte 38 in einer einzigen, z. B. von einem Transportband oder einem Gitterband gebildeten, horizontalen Produktbahn 39 durch einen horizontalen Transportkanal 40 transportiert werden. Bei dieser Ausführungsform ist oberhalb des horizontalen Transportkanales 40 ein horizontaler Luftkanal 41 angeordnet, der durch seinen, mit Luft-Durchtrittsöffnungen versehenen Boden 42 vom Transportkanal 40 getrennt ist. Unterhalb des Transportkanales 40 ist ein weiterer Luftkanal 43 angeordnet, der durch seine, mit Luft-Durchtrittsöffnungen versehene Decke 44 vom Transportkanal 40 getrennt ist. Der Boden 42 des oberen Luftkanales 14 und die Decke 44 des unteren Luftkanales 43 sind als horizontale, tragende Wände des Maschinengestelles ausgebildet, die durch vertikale Streben des Maschinengestelles miteinander verbunden sind. Bei dieser Ausführungsform bildet die vom Maschinengestell getragene, äußere Verkleidung die Seitenwände des Transportkanales 40 und der beiden Luftkanäle 41 und 43 sowie die Decke des oberen Luftkanales 41 und den Boden des unteren Luftkanales 43.

Fig. 11 zeigt einen Querschnitt durch eine horizontal langgestreckte Vorrichtung zum Behandeln von auf Stärkebasis hergestellten Produkten mit Luft. Diese Vorrichtung ist als Kühlvorrichtung ausgebildet, in der die Produkte 45 in einer einzigen, z. B. von einem Transportband oder einem Gitterband gebildeten, horizontalen Produktbahn 46 durch einen horizontalen Transportkanal 47 transportiert werden, der zwischen zwei seitlichen Luftkanälen 48, 49 einer Zone angeordnet ist. Die beiden seitlichen Luftkanäle 48, 49 sind nach innen zum Transportkanal 47 hin durch tragende Wände 50, 51 des Maschinengestelles begrenzt, die durch horizontale Querträger des Maschinengestelles miteinander verbunden und jeweils mit Luft-Durchtrittsöffnungen versehen sind. Nach oben, nach unten und nach außen sind die beiden seitlichen Luftkanäle 48, 49 durch die vom Maschinengestell getragene, äußere Verkleidung begrenzt, welche auch den Transportkanal 47 an seiner Oberseite und seiner Unterseite nach außen begrenzt.

Die Fig. 7 bis 11 zeigen Ausführungsbeispiele für eine langgestreckte Vorrichtung zum Behandeln der Produkte mit gekühlter Luft zum Kühlen der Produkte. Um diese Ausführungsbeispiele auf das Behandeln der Produkte mit Luft zum Einstellen eines bestimmten Feuchtigkeitsgehaltes der Produkte umzurüsten, müssen lediglich die Luftkanäle außerhalb der Vorrichtung an eine Luftaufbereitungsanlage angeschlossen werden, in der die in den Luftkanälen umzuwälzende Luft erwärmt, befeuchtet und gefiltert wird.

## Patentansprüche

1. Vorrichtung zum Behandeln von auf Stãrkebasis hergestellten Produkten (1, 28, 38, 45), wie z. B. essbaren Waffelprodukten oder verrottbaren Verbackungsprodukten, mit Luft zum Einstellen eines bestimmten Feuchtigkeitsgehaltes des Produktes oder zum Kühlen der Produkte; wobei ein, eine äußere Verkleidung (8) tragendes Maschinengestell (7) zumindest eine Transportvorrichtung (19) enthält, die die Produkte (1, 28, 38, 45) in zumindest einem, nach außen von der äußeren Verkleidung (8) begrenzten Transportkanal (29, 40, 47) von einer Eingabestation (5) in einer oder mehreren Produktbahnen (3a, 4a, 30, 39, 46) durch eine oder mehrere Zonen (3, 4) zu einer Ausgabestation (6) transportiert, wobei jede Zone (3, 4) zumindest zwei, zumindest teilweise parallel zu einer Produktbahn (3a, 4a, 30, 39, 46) verlaufende Luftkanäle (3b, 3c, 4b, 4c, 34, 35, 41, 43, 48, 49) enthält, die jeweils eine der Produktbahn (3a, 4a, 30, 39, 46) zugewandte und mit Lun-Durchtrittsöfmungen (12, 13, 15, 16) versehene Kanalwand besitzen, wobei in jeder Zone (3, 4) Luft aus einem Luftkanal (3b, 3c, 4b, 4c, 34, 35, 41, 43, 48, 49) quer zur Transportrichtung der Produkte (1, 28, 38, 45) durch die Produktbahn (3a, 4a, 30, 39, 46) in den anderen Luftkanal (3b, 3c, 4b, 4c, 34, 35, 41, 43, 48, 49) strömt, **dadurch gekennzeichnet, dass** jede Zone (3, 4) zumindest zwei Luftkanäle (3b, 3c, 4b, 4c, 34, 35, 41, 43, 48, 49) enthält, die nach außen jeweils von der äußeren Verkleidung (8) und nach innen jeweils von einer mit Luft-Durchthttsöfnungen (12,13,15,16) versehenen Kanalwand begrenzt sind, die von einer tragenden Wand (9, 10, 36, 37, 42, 44, 50, 51) des Maschinengestelles (7) gebildet wird, und dass zumindest zwei dieser tragenden Wände (9, 10, 36, 37, 42, 44, 50, 51) des Maschinengestelles (7) zwischen sich zumindest einen Transportkanal (29, 40, 47) aufnehmen, der zumindest eine Produktbahn (3a, 4a 30, 39, 46) enthält.

2. Vorrichtung nach Anspruch 1, **dadurch gekennzeichnet, dass** jede tragende Wand (36, 37, 42, 44, 50, 51) des Maschinengestelles, die mit einem Wandbereich eine mit Luft- Durchtrittsöffnungen versehene Kanalwand eines Luftkanales (34, 35, 41, 43, 48, 49) bildet, zumindest an der diesem Luftkanal (34, 35, 41, 43, 48, 49) zugewandten Seite dieses Wandbereiches als glatte Wand ausgebildet ist.

3. Vorrichtung nach Anspruch 1, **dadurch gekennzeichnet, dass** jede tragende Wand (36, 37, 42, 44, 50, 51) des Maschinengestelles, die mit einem Wandbereich eine mit Luft- Durchtrittsöffnungen versehene Kanalwand eines Luftkanales (34, 35, 41, 43, 48, 49) bildet, an der diesem Luftkanal (34, 35, 41, 43, 48, 49) zugewandten Seite dieses Wandbereiches und an der von diesem Luftkanal (34, 35, 41, 43, 48, 49) abgewandten Seite dieses Wandbereiches als glatte Wand ausgebildet ist.

4. Vorrichtung nach einem der Ansprüche 1 - 3, **dadurch gekennzeichnet, dass** ein langgestreckter, im wesentlichen horizontaler, eine oder mehrere Produktbahnen (30, 39, 46) enthaltender Transportkanal (29, 40, 47) zwischen zwei tragenden Wänden (36, 37, 42, 44, 50, 51) des Maschinengestelles angeordnet ist, die die mit Luft-Durchtrittsöffnungen versehenen Kanalwände zweier oder mehrerer Luftkanäle (34, 35, 41, 43, 48, 49) bilden.

5. Vorrichtung nach Anspruch 4, **dadurch gekennzeichnet, dass** im horizontalen Transportkanal (29) zwischen zwei übereinander angeordneten Produktbahnen (30) jeweils eine horizontale Zwischenwand vorgesehen ist, die die beiden, den Transportkanal (29) begrenzenden, jeweils die mit Luft-Durchtrittsöffnungen versehenen Kanalwände zweier oder mehrerer Luftkanäle (34, 35) bildenden, tragenden Wände (36, 37) des Maschinengestelles steif miteinander verbinden.

6. Vorrichtung nach Anspruch 4 oder 5, **dadurch gekennzeichnet, dass** der Transportkanal (29) übereinander angeordnete Produktbahnen (30) enthält, denen jeweils eine eigene Transportvorrichtung zugeordnet ist.

7. Vorrichtung nach Anspruch 4 oder 5, **dadurch gekennzeichnet, dass** sich in dem Transportkanal (29) zumindest eine endlose Transportvorrichtung durch zwei übereinander angeordnete Produktbahnen (30) erstreckt.

8. Vorrichtung nach Anspruch 3, **dadurch gekennzeichnet, dass** ein langgestreckter, im wesentlichen vertikaler, einer oder mehrere Produktbahnen (3a, 4a) enthaltender Transportkanal zwischen zwei tragenden Wänden (9, 10) des Maschinengestelles (7) angeordnet ist, die die mit Luft-Durchtrittsöffnungen (12, 13, 15, 16) versehenen Kanalwände zweier oder mehrerer Luftkanäle (3b, 3c, 4b, 4c) bilden.

9. Vorrichtung nach Anspruch 8, **dadurch gekennzeichnet, dass** im vertikalen Transportkanal zwischen zwei benachbarten Produktbahnen (3a, 4a) eine vertikale Zwischenwand (11) vorgesehen ist, die die beiden, den Transportkanal begrenzenden, jeweils die mit Luft- Durchtrittsöffnungen (12, 13, 15, 16) versehenen Kanalwände zweier oder mehrerer Luftkanäle (3b, 3c, 4b, 4c) bildenden, tragenden Wände (9, 10) des Maschinengestelles (7) steif miteinander verbinden.

10. Vorrichtung nach Anspruch 8 oder 9, **dadurch gekennzeichnet, dass** im vertikalen Transportkanal zumindest eine endlose Transportvorrichtung (19) für die Produkte (1) vorgesehen ist, die sich durch zwei benachbarte Produktbahnen (3a, 4a) erstreckt und zur äußeren Verkleidung (8) hin offene Transportfächer (18) aufweist, die an ihren Innenseiten durch zumindest ein endloses Band (23) der Transportvorrichtung (19) begrenzt sind.

11. Vorrichtung nach einem der Ansprüche 1 - 10, **dadurch gekennzeichnet, dass** die, jeweils eine mit Luft-Durchtrittsöffnungen versehene Kanalwand eines Luftkanales (34, 35, 41, 43, 48, 49) bildenden, tragenden Wände (36, 37, 42, 44, 50, 51) des Maschinengestelles als massive Platten ausgebildet sind.

12. Vorrichtung nach einem der Anspräche 1 - 11, **dadurch gekennzeichnet, dass** die, jeweils eine mit Luft-Durchtrittsöffnungen versehene Kanalwand eines Luftkanales (34, 35, 41, 43, 48, 49) bildenden, tragenden Wände (36, 37, 42, 44, 50, 51) des Maschinengestelles als massive Aluminiumplatten ausgebildet sind.

13. Vorrichtung nach einem der Ansprüche 1 - 12, **dadurch gekennzeichnet, dass** die äußere Verkleidung zumindest im Bereich der von ihr nach außen begrenzten Luftkanäle (34, 35, 41, 43, 48, 49) am Maschinengestell schwenkbar gelagerte Türen aufweist die im geschlossenen Zustand mit ihren glatten Innenseiten den jeweiligen Luftkanal (34, 35, 41, 43, 48, 49) nach außen begrenzen

## Claims

1. Device for treating starch-based products (1, 28, 38, 45), such as edible waffle products or perishable packaging products, with air to set a particular moisture content in the products or to cool the products, with an externally encased (8) machine frame (7) containing at least one transfer device (19) which conveys the products (1, 28, 38, 45) in one or more lines for products (3a, 4a, 30, 39, 46) In at least one thus externally encased (8) transfer duct (29, 40, 47) through one or more zones (3, 4) from a feeder station (5) to a delivery station (6), each zone (3, 4) containing not less than two air ducts (3b, 3c, 4b, 4c, 34, 35, 41, 43, 48, 49) which extend at least in part parallel to a product line (3a, 4a, 30, 39, 46), said air ducts each possessing a duct wall provided with ventilation passages (12, 13, 15, 16) and facing towards the line for products (3a, 4a, 30, 39, 46); in each zone (3, 4) air from one air duct (3b, 3c, 4b, 4c, 34, 35, 41, 43, 48, 49) flows through the line for products (3a, 4a, 30, 39, 46) and into the other air duct (3b, 3c, 4b, 4c, 34, 35, 41, 43, 48, 49), in a direction transverse to that In which the products (1, 28, 38, 45) are being conveyed,
**characterised in that** each zone (3, 4) contains not less than two air ducts (3b, 3c, 4b, 4c, 34, 35, 41, 43, 4B, 49) which are delimited outwardly by the outer casing (8) in each case, and inwardly by a respective duct wall provided with ventilation passages (12, 13, 15, 16), said duct wall being formed by a supporting wall (9, 10, 36, 37, 42, 44, 50, 51) of the machine frame (7), and that not less than two of said machine frame (7) supporting wells (9, 10, 36, 37, 42, 44, 50, 51) accommodate between them at least one transfer duct (29, 40, 47) which contains at least one line for products (3a, 4a, 30, 39, 48).

2. Device according to claim 1, **characterised in that** each machine frame supporting wall (36, 37, 42, 44, 50, 51), one zone of which forms an air duct wall (34, 35, 41, 43, 48, 49) provided with ventilation passages, is configured as a smooth wall at least on the side of said wall zone that is facing towards said air duct (34, 35, 41, 43, 48, 49).

3. Device according to claim 1, **characterised in that** each machine frame supporting wall (36, 37, 42, 44, 50, 51 ), one zone of which forms an air duct wall (34, 35, 41, 43, 48, 49) provided with ventilation passages, is configured as a smooth wall on the side of said wall zone that is facing towards said air duct (34, 35, 41, 43, 48, 49) and on the side of said wall zone that is facing away from said air duct (34, 35, 41, 43, 48, 49).

4. Device according to any of claims 1 to 3, **characterised in that** an elongate, substantially horizontal transfer duct (29, 40, 47) containing one or more lines for products (30, 39, 46) is arranged between two machine frame supporting walls (36, 37, 42, 44, 50, 51) which form the duct walls, provided with ventilation passages, of two or more air ducts (34, 35, 41, 43, 48, 49).

5. Device according to claim 4, **characterised in that** provided in the horizontal transfer duct (29), between two product lines (30) disposed one above the other, is a respective horizontal partition which rigidly interconnects the two machine frame supporting walls (36, 37) which delimit the transfer duct (29) and respectively form the walls of two or more air ducts (34, 35), each of which is provided with ventilation passages.

6. Device according to claim 4 or 5, **characterised in that** the transfer duct (29) contains product lines (30) which are disposed one above the other, each with its own operatively associated transfer device.

7. Device according to claim 4 or 5, **characterised in that** at least one continuous transfer device extends in the transfer duct (29) through two product lines (30) disposed one above the other.

8. Device according to claim 3, **characterised in that** an elongate, substantially vertical transfer duct containing one or more lines for products (3a, 4a) is arranged between two machine frame (7) supporting walls (9, 10) which form the walls of two or more air ducts (3b, 3c, 4b, 4c) provided with ventilation passages (12, 13, 15, 16).

9. Device according to claim 8, **characterised in that** a vertical partition (11) is provided in the vertical transfer duct between two adjacent lines for products (3a, 4a), said partition (11) rigidly interconnecting the two machine frame (7) supporting walls (9, 10) which delimit the transfer duct and respectively form the walls of two or more air ducts (3b, 3c, 4b, 4c), each of which is provided with ventilation passages (12, 13, 15, 16).

10. Device according to claim 8 or 9, **characterised in that** provided in the vertical transfer duct is at least one continuous transfer device (19) for the products (1) which extends through two adjacent product lines (3a, 4a) and incorporates transfer pockets (18) open towards the outer casing (8), said pockets being delimited on their inner faces by at least one continuous belt (23) of the transfer device (19).

11. Device according to any of claims 1 to 10, **characterised in that** the machine frame supporting walls (36, 37, 42, 44, 50, 51), each of which forms a wall of an air duct (34, 35, 41, 43, 48, 49) provided with ventilation passages, are constructed as solid panels.

12. Device according to any of claims 1 to 11, **characterised in that** the machine frame supporting walls (36, 37, 42, 44, 50, 51), each of which forms a wall of an air duct (34, 35, 41, 43, 48, 49) provided with ventilation passages; are constructed as solid aluminium panels.

13. Device according to any of claims 1 to 12, **characterised in that** the outer casing, at least in the region of the air ducts (34, 35, 41, 43, 48, 49) outwardly delimited thereby, incorporates doors which are mounted so as to swivel on the machine frame and in the closed position outwardly delimit the respective air duct (34, 35, 41, 43, 48, 49) by means of their smooth inner faces.

## Revendications

1. Dispositif de traitement de produits (1, 28, 38, 45) préparés à base d'amidon, comme par exemple des produits gaufrés comestibles ou des produits d'emballage pouvant se putréfier par de l'air pour établir une teneur déterminée en humidité des produits ou pour refroidir les produits, un bâti (7) de machine portant un habillage (8) extérieur comportant au moins un dispositif de transport, qui transporte les produits (1, 28, 38, 45) au moins dans un canal (29, 40, 47) de transport délimité vers l'extérieur par l'habillage (8) extérieur d'un poste (5) d'entrée suivant une ou plusieurs voies (3a, 4a, 30, 39, 46) pour le produit en passant par une ou plusieurs zones (3, 4) à un poste (6) de sortie, chaque zone (3, 4) comportant au moins deux canaux (3b, 3c, 4b, 4c, 34, 35, 41, 43, 48, 49) pour de l'air s'étendant au moins en partie parallèlement à une voie (3a, 4a, 30, 39, 46) pour le produit, canaux qui ont respectivement une paroi de canal tournée vers la voie pour le produit et munie d'orifices (12, 13, 15, 16) de passage de l'air, de l'air provenant d'un canal (3b, 3c, 4b, 4c, 34, 35, 41, 43, 48, 49) pour de l'air passant dans chaque zone (3, 4) transversalement à la direction de transport des produits par la voie (3a, 4a, 30, 39, 46) pour le produit dans l'autre canal (3b, 3c, 4b, 4c, 34, 35, 41, 43, 48, 49) pour de l'air, **caractérisé en ce que** chaque zone (3, 4) comporte au moins deux canaux (3b, 3c, 4b, 4c, 34, 35, 41, 43, 48, 49) pour de l'air, qui sont délimités vers l'extérieur respectivement par l'habillage (8) extérieur et vers l'intérieur respectivement par une paroi de canal munie d'orifices (12, 13, 15, 16) de passage de l'air, la paroi de canal étant formée d'une paroi (9, 10, 36, 37, 42, 44, 50, 51) porteuse du bâti (7) de la machine et **en ce qu'**au moins deux de ces parois (9, 10, 36, 37, 42, 44, 50, 51) porteuses du bâti (7) de la machine prennent entre elles au moins un canal (29, 40, 47) de transport qui comporte au moins une voie (3a, 4a, 30, 39, 46) pour le produit.

2. Dispositif suivant la revendication 1, **caractérisé, en ce que** chaque paroi (36, 37, 42, 44, 50, 51) porteuse du bâti de la machine qui forme, avec une partie de paroi, une paroi de canal (34, 35, 41, 43, 48,49) pour l'air munie d'orifices de passage de l'air, est constituée sous la forme d'une paroi lisse, au moins du côté de cette partie de paroi qui est tourné vers ce canal (34, 35, 41, 43, 48, 49) pour de l'air.

3. Dispositif suivant la revendication 1, **caractérisé en ce que** chaque paroi (36, 37, 42, 44, 50, 51) porteuse du bâti de la machine, qui forme, avec une partie de paroi, une paroi d'un canal (34, 35, 41, 43, 48, 49) pour de l'air munie d'orifices de passage de l'air, est constituée sous la forme d'une paroi lisse du côté de cette partie de paroi qui est tourné vers le canal (34, 35, 41, 43, 48, 49) pour de l'air et du côté de cette partie de paroi qui est éloigné de ce canal (34, 35, 41, 43, 48, 49) pour de l'air.

4. Dispositif suivant l'une des revendications 1 à 3, **caractérisé en ce qu'**un canal (29, 40, 47) de transport s'étendant en longueur, sensiblement horizontal et comportant une ou plusieurs voies (30, 39, 46) pour le produit est disposé entre deux parois (36, 37, 42, 44, 50, 51) porteuses du bâti de la machine qui forment, avec les parois de canal munies d'orifices de passage. de l'air, deux canaux pour de l'air ou plusieurs canaux (34, 35, 41, 43, 48, 49) pour de l'air.

5. Dispositif suivant la revendication 4, **caractérisé en ce qu'**il est prévu dans le canal (29) horizontal de transport, entre deux voies (30) pour le produit .qui sont superposées, respectivement une paroi horizontale intermédiaire, qui relie entre elles de manière rigide les deux parois (36, 37) porteuses du bâti de la machine, délimitant le canal (29) de transport et formant respectivement les parois munies d'orifices de passage de l'air, de deux canaux (34, 35) pour de l'air ou de plusieurs canaux pour de l'air.

6. Dispositif suivant la revendication 4 ou 5, **caractérisé en ce que** le canal (29) de transport comporte des voies (30) pour le produit qui sont superposées et auxquelles sont associés respectivement des dispositifs de transport qui leurs sont propres.

7. Dispositif suivant la revendication 4 ou 5, **caractérisé, en ce qu'**au moins un dispositif de transport sans fin s'étend dans le canal de transport dans deux voles (30) pour le produit qui sont superposées.

8. Dispositif suivant la revendication 3, **caractérisé en ce qu'**il est prévu un canal de transport s'étendant en longueur sensiblement vertical et comportant une voie (3a, 4a) ou plusieurs voles pour du produit entre deux parois (9, 10) porteuses du bâti (7) de la machine qui forment, avec des parois de canal munies d'orifices (12, 13, 15, 16) de passage d'air, deux canaux (3b, 3c, 4b, 4c) pour de l'air ou plusieurs canaux pour de l'air.

9. Dispositif suivant la revendication 8, **caractérisé en ce qu'**il est prévu dans le canal vertical de transport entre deux voies (3a, 4a) voisines pour du produit, une paroi (11) intermédiaire verticale qui relie entre elles de manière rigide les deux parois (9, 10) porteuses du bâti (7) de la machine, qui délimitent le canal de transport et qui forment respectivement les parois de canal munies d'orifices (12, 13, 15, 16) de passage d'air de deux canaux (3b, 3c, 4b, 4c) pour de l'air ou de plusieurs canaux pour de l'air.

10. Dispositif suivant la revendication 8 ou 9, **caractérisé en ce qu'**il est prévu dans le canal vertical de transport au moins un dispositif (19) sans fin de transport des produits (1) qui s'étend entre deux voies (3a, 4a) voisines pour le produit et qui a des casiers de transport (18) ouverts vers l'habillage (8) extérieur et délimités sur leur côté intérieur par au moins une bande (23) sans fin du dispositif (19) de transport.

11. Dispositif suivant l'une des revendications 1 à 10, **caractérisé en ce que** les parois (36, 37, 42, 44, 50, 51) porteuses du bâti de la machine qui forment respectivement une paroi d'un canal (34, 35, 41, 43, 48,49) pour de l'air munie d'orifices de passage d'air sont constituées sous la forme de plaques pleines.

12. Dispositif suivant l'une des revendications 1 à 11, **caractérisé, en ce que** les parois (36, 37, 42, 44, 50, 51) porteuses du bâti de la machine qui forment respectivement une paroi d'un canal (34, 35, 41, 43, 48, 49) pour de l'air munie d'orifices de passage d'air sont constituées sous la forme de plaques d'aluminium pleines.

13. Dispositif suivant l'une des revendications 1 à 12, **caractérisé en ce que** l'habillage extérieur a, au moins dans la partie des canaux (34, 35, 41, 43, 48, 49) pour de l'air qu'il délimite vers l'extérieur, des portes montées basculantes sur le bâti de la machine et délimitant vers l'extérieur à l'état fermé par leur côté intérieur lisse le canal (34, 35, 41, 43, 48, 49) respectif pour de l'air.
